(19) **Europäisches Patentamt European Patent Office Office européen des brevets**

(11) **EP 1 482 153 B1**

(12) **EUROPEAN PATENT SPECIFICATION**

(45) Date of publication and mention
of the grant of the patent:
**17.01.2007 Bulletin 2007/03**

(51) Int Cl.:
*F02D 41/00* (2006.01)     *F02D 21/08* (2006.01)
*F02D 43/00* (2006.01)

(21) Application number: **03011893.9**

(22) Date of filing: **27.05.2003**

(54) **A combustion engine and a method for controlling air mass flow and EGR rate**

Brennkraftmaschine und Verfahren zur Steuerung des Ladeluftmassenstroms und der
Abgasrückführungsrate

Moteur à combustion et méthode de commande de la quantité d'air et d'EGR

(84) Designated Contracting States:
**DE GB SE**

(43) Date of publication of application:
**01.12.2004 Bulletin 2004/49**

(73) Proprietor: **Ford Global Technologies, LLC.
Dearborn, MI 48126 (US)**

(72) Inventor: **Bernler, Hans
SE-414 62 Göteborg (SE)**

(74) Representative: **Ekström, Nils
Albihns Göteborg AB
P.O. Box 142
401 22 Göteborg (SE)**

(56) References cited:
**EP-A- 0 810 360     EP-A- 1 024 261
EP-A- 1 241 336     US-A- 5 738 126
US-A1- 2002 066 442     US-A1- 2002 124 838
US-B1- 6 311 679**

**Description**

TECHNICAL FIELD

The invention relates to a combustion engine according to the preamble of claim 1. The invention relates to a combustion engine provided with means for controlling the rate of exhaust feed back (EGR) into said intake conduit of the combustion engine. The means for controlling the exhaust feed back includes a regulator unit. In particular the invention relates to a combustion engine further provided with means for controlling the air mass flowing into an intake conduit of a combustion engine. The means for controlling the air mass flow includes a second regulator unit

Furthermore the invention relates to a method for controlling a combustion engine according to the preamble of claim 12. The invention relates to a method for controlling the rate of exhaust feed back (EGR) into said intake conduit of the combustion engine. The method includes control of exhaust feed back by an EGR regulator unit. In particular the invention relates to a method for controlling a combustion engine in which in addition to control of the EGR rate, the air mass flowing into an intake conduit of a combustion engine is controlled by control of an intake air-regulating valve by a second regulator unit.

BACKGROUND ART

The requirement on modern combustion engines, in particular for use in the automotive industry, concerning reduction of fuel consumption and reduction of pollutants in the exhausts is progressively becoming stricter for each year.

In order to obtain low fuel consumption and low levels of pollutants in the exhaust it is necessary to adequately control the charge of air into the combustion chambers. This control is inter alia performed by air mass flow meters estimating the amount of air introduced into an intake conduit of the combustion engine. The amount of air can be controlled by an electronically controlled air massflow regulating valve, which is controlled in dependence of an input signal from the air massflow meter.

In order to reduce further the amount of pollutants and in order to reduce further fuel consumption exhaust feed back is provided. Exhaust feedback is arranged by leading a portion of the exhaust generated in the combustion process in a combustion chamber of the engine back into the intake conduit of the engine. In order to control the amount of exhaust gas introduced into the intake conduit an exhaust feed back valve can be arranged in an exhaust gas feed back line connecting the intake conduit with an exhaust conduit connected to the engine.

Different proposals for conjoint control of intake air mass flow and exhaust gas feedback exist. In US 5974870, the air mass flow and the EGR rate are decided according to an inlet pipe flow model in which is based on a nonlinear differential equation, using inter alia the position of the valves as input parameters. The system described requires large datahandling capacity in order to estimate a solution to the differential equation and does furthermore not provide a system that controls the intake air mass flow and the EGR rate in a stable way.

Another example of a system diagnosing is provided in US 6109249, which describes a system for determining the air mass flow and the EGR mass flow into a combustion chamber. The system operates by performing calculations of the mass flow through a throttle valve and the mass flow through an EGR valve. The mass flow through the EGR valve is determined inter alia from a signal indicating the position for the EGR valve. It has shown that the suggested system does not provide a system which controls the intake air mass flow and the EGR rate in a stable way.

Another example is given by US 6 311 679.

DISCLOSURE OF INVENTION

An object of the invention is to provide a method for controlling a combustion engine, which provides stable control of the intake air mass flow and the EGR rate and which does not require excessive calculations.

A general problem of controlling air mass flow and EGR is that the air mass flow and EGR are different in different working points and are going to be changed at the same time. A mass flow sensor measures the air supplied into the engine, whereas the intake pressure depends on the EGR rate, when the mass flow is known. Measuring of the intake conduit pressure therefore provides indirectly the corresponding EGR rate.

The air mass flow and the EGR rate are both controlled by the EGR-valve and the intake throttle valve. The object of the invention is to control these two variables with a short response time and in a stable manner.

According to the invention, an EGR regulator unit is arranged to control the amount of exhaust gas feedback by controlling the pressure in the intake conduit, said EGR regulator unit is arranged to control the exhaust feedback valve in dependence of an input signal representing the pressure measured by said intake pressure meter and a set point signal representing the desired intake pressure.

Furthermore, the intake throttle is controlled by a second regulator unit, which is arranged to control the intake throttle in dependence of an input signal representing an air mass flow measured by an air mass flow meter positioned in the intake conduit and a set point signal representing a requested air mass flow.

The air mass flow and the intake pressure are heavily dependent on each other in a complex manner. Even if the parameters in the regulators are slow, such a system is not always stable.

The invention contemplates the use of a desired intake pressure which is dependent on said requested air mass flow and an amount of exhaust gas corresponding to a steady state amount of exhaust gas present at a requested intake pressure. By the use of set point signal according to the invention several tests have shown that the system is stable.

The second regulator unit ensures that the air mass flow into the intake conduit corresponds to a requested amount being dependent upon engine operating conditions while the EGR regulator unit makes sure that the EGR rate as well as possible corresponds to a requested exhaust gas feed back level. In order to achieve this goal the EGR regulator unit is arranged to control the exhaust feedback valve in dependence of an input signal representing the pressure measured by said intake pressure meter and a set point signal representing the desired intake pressure, where the desired intake pressure is dependent on said measured air mass flow and an amount of exhaust gas corresponding to a steady state amount of exhaust gas present at a requested intake pressure.

Below an analysis of the control problem of the EGR regulator unit is presented.

The intake conduit has a control volume $V_{man}$, a temperature $T_{man}$ and an intake pressure $P_{man}$. A mass $m_{in}$, is flowing into the control volume $V_{man}$, which corresponds to at least the part of the intake conduit positioned downstream of an opening leading into an exhaust return line. The mass $m_{in}$ includes the mass generated from the air flow $m_{air}$ and the exhaust gas $m_{egr}$. Furthermore a mass $m_{out}$, is flowing out from the control volume $V_{man}$. The analysis is performed under the assumption that the control process is a batch process rather than a continuous process. Therefore a mass difference can be used instead of the time derivative of the mass in a control volume. Since the operation of a piston engine rather resembles a batch process than a continuous process, it has shown that use of a batch process model provides more accurate estimation of the condition in the intake conduit.

In the model the initial condition, which corresponds to the actual state, is defined by the following variables:

$m_{air}$,     which is the amount of external air passing into the control volume $V_{man}$. $m_{air}$ is measured by an air mass flow meter positioned in the intake conduit.

$P_{intake}$,     which is the pressure in the intake conduit at the control volume $V_{man}$. $P_{intake}$ is measured by an intake pressure meter positioned in the intake conduit.

$m_{in}$     which is the mass flowing into the control volume $V_{man}$. The mass $m_{in}$ includes the mass generated from the air flow, $m_{air}$, and the exhaust gas $m_{EGR}$.

$m_{out}$     which is the mass flowing out from the control volume $V_{man}$.

$T_{man}$     which is the temperature in the control volume $V_{man}$. $T_{man}$ is measured in the control volume $V_{man}$.

The final state corresponds to requested values of air mass flow, intake pressure and EGR from an engine control unit, which is arranged to provide operating conditions for the engine such that requested engine output power at a given engine speed can be obtained. The final state is defined by the following variables:

$m_{air,Dem}$     which is the requested amount of external air passing into the control volume $V_{man}$. $m_{air,Dem}$ is provided from a map stored in the engine control unit.

$P_{intake,Dem}$,     which is the requested pressure in the intake conduit at the control volume $V_{man}$. $P_{intake,Dem}$ is provided from a map stored in the engine control unit.

$m_{EGR,stat}$     which is the stationary EGR mass flow at the requested operating point. The operating point is primarily defined by a requested output torque at a given engine speed. $m_{EGR,Stat}$ is provided from a map stored in the engine control unit.

The object of the invention is to provide a set point signal representing a desired intake pressure $P_{intake,DynDem}$, which provides an EGR target value $m_{EGR,taget}$. The EGR target value $m_{EGR,target}$ is not the same as the stationary EGR mass flow $m_{EGR,Stat}$ at the requested operating point, instead the EGR target value $m_{EGR,target}$ is a function of the measured intake air mass flow $m_{air}$ and the stationary EGR mass flow $m_{EGR,stat}$ at the requested operating point. By not using the stationary EGR mass flow $m_{EGR,Stat}$ at the requested operating point as an EGR target value an intake air gas mixture having more proper proportion of air and EGR at transient conditions is achieved. In a preferred embodiment of the invention this EGR target value is set to:

$$(1) \qquad m_{EGR,target} = m_{air} \cdot m_{EGR,stat} / m_{air,dem}.$$

By using this relationship the EGR flow and air mass flow is constant and equal to the stationary working point that the regulator units are aiming for, which is the demanded air mass flow $m_{air,Dem}$ and the stationary EGR $m_{EGR,Stat}$.

The desired intake pressure $P_{intake,Dyn\,dem}$ is calculated from the following equation:

$$(2) \qquad P_{intake,Dyn\,dem} = P_{intake} - \Delta P_{intake},$$

where $\Delta P_{intake}$ is the pressure difference that has to be deducted from the intake conduit in order to arrive at the desired intake pressure $P_{intake,Dyn\,dem}$.

This pressure difference is calculated from the ideal gas law, which states,

$$(3) \qquad \Delta P_{intake} = \zeta \Delta m,$$

where $\zeta = T_{man}R/(V_{man}M_{air})$ and $\Delta m$ equals the mass difference of air flowing into $m_{in}$ and out from $m_{out}$ the intake conduit, thus $\Delta m = m_{in} - m_{out}$.

The mass $m_{in}$ includes the mass generated from the air flow, $m_{air}$, and the exhaust gas $m_{EGR}$. Here the EGR target value $m_{EGR,target}$ is used. Thus, the following hold for air flowing into the control volume:

$$(4) \qquad m_{in} = m_{air} + m_{EGR,target}.$$

In order to provide a deterministic model information about the flow of mass $m_{out}$ out from the control volume $V_{man}$ is needed. According to the invention, the mass $m_{out}$ flowing out from the control volume $V_{man}$ is set to be a function of the intake pressure $P_{intake}$ and the requested intake mass flow $m_{air,Dem}$. In a preferred embodiment, the mass $m_{out}$ flowing out from the control volume $V_{man}$ is set according to the following formula:

$$(5) \qquad m_{out} = P_{intake}\, m_{in,dem}/\, P_{intake,dem}, \text{ where } m_{in,Dem} = m_{air,dem} + m_{EGR,Stat}.$$

where $m_{in,Dem} = m_{air,dem} + m_{EGR,Stat}$.

Using equations (1), (3), (4) and (5) in equation (2) we obtain the following equation for deciding the desired intake pressure $P_{intake,Dyn\,dem}$:

$$(6) \qquad P_{intake,Dyn\,dem} = P_{intake} + \zeta\,[m_{air}(1+ m_{EGR,stat}/\, m_{air,dem}) - P_{intake}\,(m_{air,dem}$$
$$+ m_{EGR,Stat})/\, P_{intake,dem}]$$

An analysis of the formula show that a regulator unit using the desired intake pressure as a set point signal helps a regulator controlling the intake air mass flow since if the air mass controller has not reached the target value, the EGR regulator would compensate. For example, if the air mass flow is lower than the demanded, the desired intake pressure is also reduced, whereby the EGR valve is closing. Since the EGR valve is closing a higher intake air mass flow would result.

BRIEF DESCRIPTION OF DRAWINGS

A combustion engine and a method for controlling a combustion engine, which make use of a regulator unit controlling the intake pressure as described above, will be presented below with references to appended drawings, where:

fig. 1    show a schematic drawing a combustion engine using a set of regulator units according to the invention, and

fig. 2    show a block diagram for performing a method according to the invention, and

fig. 3   show a flowchart for controlling an EGR valve.

MODE(S) FOR CARRYING OUT THE INVENTION

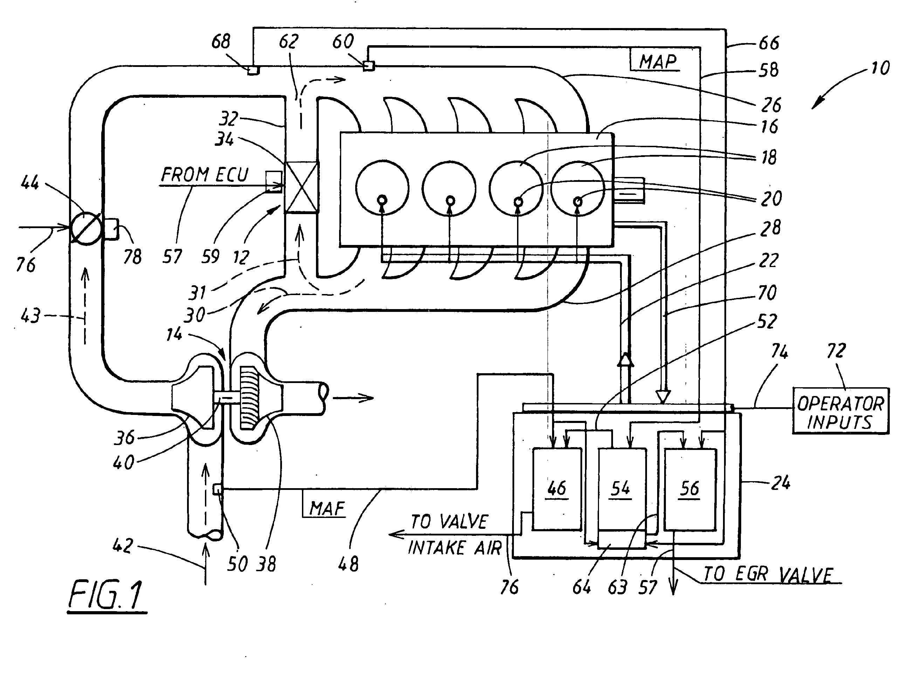

Figure 1 shows a simplified schematic diagram of a compression ignition engine system 10 equipped with an exhaust gas recirculation (EGR) system 12 and a turbocharger 14. The invention may also be used in other types of combustion engines such as engines being loaded from a compressor or naturally aspirating combustion engines.

A representative engine block 16 is shown having four combustion chambers 18. Each of the combustion chambers 18 includes a direct-injection fuel injector 20. The duty cycle of the fuel injectors 20 is determined by the engine control unit (ECU) 24 and transmitted along signal line 22. Air enters the combustion chambers 18 through the intake conduit 26, which is in the form of an intake manifold, and combustion gases are exhausted through the exhaust manifold 28 in the direction of arrow 30.

To reduce the level of NOx emissions and to ensure that the engine is not too rapidly cooled under certain engine operating conditions, the engine is equipped with an EGR system 12. The EGR system 12 comprises a conduit 32 forming an exhaust gas feedback line and connecting the exhaust manifold 28 to the intake conduit 26. This allows a portion of the exhaust gases to be circulated from the exhaust manifold 28 to the intake conduit 26 in the direction of arrow 31. The EGR system further includes means 12A for controlling exhaust gas feedback. The means for controlling exhaust gas feedback includes an exhaust feedback flow control device 34 arranged in the exhaust gas feedback line and an EGR regulator unit 56. The exhaust feedback flow control device, such as an EGR valve 34 regulates the amount of exhaust gas recirculated from the exhaust manifold 28. In the combustion chambers, the recirculated exhaust gas acts as an inert gas, thus lowering the flame and in-cylinder gas temperature and decreasing the formation of NOx. On the other hand, the recirculated exhaust gas displaces fresh air and reduces the air-to-fuel ratio of the in-cylinder mixture.

The turbocharger 14 uses exhaust gas energy to increase the mass flow of the air charge delivered to the engine combustion chambers 18. The exhaust gas flowing in the direction of arrow 30 drives the turbocharger 14. This larger mass of air can be burned with a larger quantity of fuel, resulting in more torque and power as compared to naturally aspirated, non-turbocharged engines.

The turbocharger 14 consists of a compressor 36 and a turbine 38 coupled by a common shaft 40. The exhaust gas 30 drives the turbine 38 which drives the compressor 36 which, in turn, compresses ambient air 42 and directs it (arrow 43) into the intake conduit 26.

In order to ensure that a correct amount of air is fed to the combustion chambers 18 an intake air regulating means 44, for example an intake air regulating valve is provided in the intake manifold 26 at a position downstream of the compressor 36. The intake air regulating valve 44 is controlled by a second regulator unit 46 which is arranged to control the intake air regulating valve 44 in dependence upon an input signal 48 representing an air mass flow measured by an air mass flow meter 50 provided in the intake conduit upstream of the compressor 36. The second regulator unit receives a set point signal 52 representing a requested air mass flow from a set of maps 54 provided in the engine control unit 24. The set of maps 54 are arranged to provide operating conditions for the engine such that requested engine output power at a given engine speed can be obtained.

Furthermore the EGR regulator unit 56 is arranged to control the position of the exhaust feedback valve 34. The EGR regulator unit 56 receives an input signal 58 representing the pressure measured by an intake pressure meter 60 arranged in the intake conduit 26 at a position downstream of an orifice 62 where the exhaust feedback line 32 is connected to the intake conduit 26. The EGR regulator unit 56 receives a set point signal 63 representing the desired intake pressure. The desired intake pressure is calculated in a function block 64, which uses information from the set of maps 54 provided in the engine control unit. The calculation is performed according to what has been previously presented in the application. The function block is provided with an input signal 66 representing the temperature measured by a temperature sensor 68 in the intake conduit 26.

Additional sensory inputs are also be received by the ECU along signal line 70 such as engine coolant temperature, engine speed, and throttle position. Additional operator inputs 72 are received along signal 74 such as the accelerator pedal position.

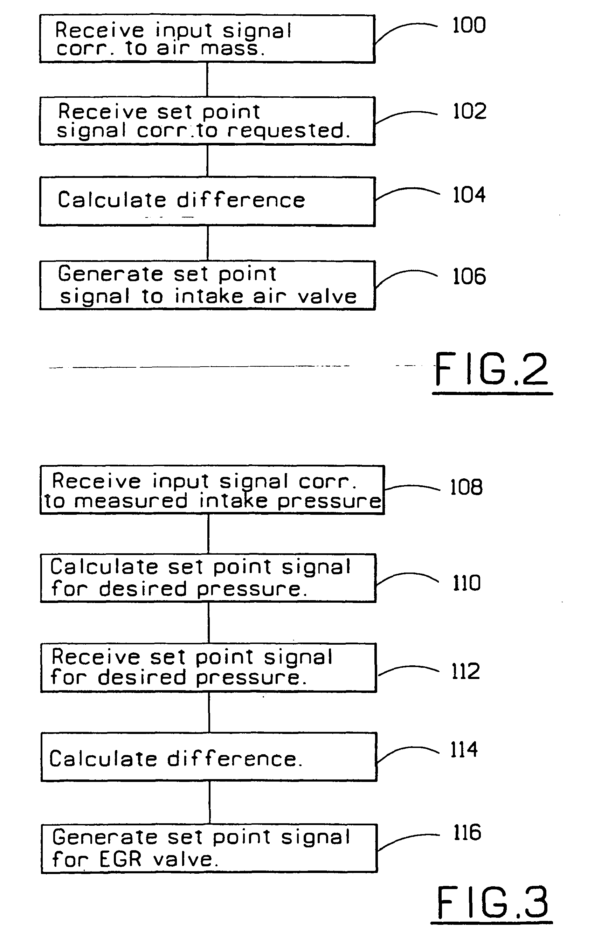

Figure 2 shows a flowchart for controlling the intake air regulating valve 44. In a first method step 100, the second regulator unit 46 receives an input signal from an air mass flow meter 50. In a second method step 102, the second regulator unit 46 receives a set point signal corresponding to a requested air flow. In a third method step 104, the difference between the actual air flow and the requested airflow is calculated and in a fourth method step 106 a set point signal 76 for the valve position is generated and transmitted to a valve actuator 78 arranged in the valve. The regulator and valve actuator are of conventional type and several types of arrangements are known to a person skilled in the art.

Figure 3 shows a flowchart for controlling the EGR valve 34. In a first method step 108, the EGR regulator unit 56 receives an input signal from a pressure sensor 60. In a second method step 110, the EGR regulator unit 56 receives a set point signal corresponding to a desired intake pressure. In a third method step 112, the desired intake pressure is calculated in the first function block 64. In a fourth method step 114, the difference between the actual pressure and the desired pressure is calculated and in a fifth method step 116 a set point signal 57 for the valve position is generated and transmitted to a valve actuator 59 arranged in the valve. The regulator and valve actuator are of conventional type and several types of arrangements are known to a person skilled in the art.

The two control routines described in relation to figure 2 and 3 are simultaneously running. The air mass flow is thereby regulated by a second regulator unit which is controls the intake air regulating valve in dependence upon an input signal representing an air mass flow measured by an air mass flow meter and a set point signal representing a requested air mass flow. Furthermore, an EGR regulator unit controls the pressure in the intake conduit at a position downstream of the air mass flow regulating valve. The EGR regulator unit regulates the pressure, and thereby the amount of EGR, using an input signal representing the pressure measured by an intake pressure meter and set point signal representing the desired intake pressure. The pressure in the intake conduit is thus controlled by controlling exhaust gas feed back by regulating an exhaust feedback valve arranged in an exhaust gas feed back line in dependence upon an input signal representing the pressure measured by an intake pressure meter and set point signal representing the desired intake pressure. The desired intake pressure is dependent on said measured air mass flow and an amount of exhaust gas corresponding to a steady state amount of exhaust gas present at a requested intake pressure.

The invention shall not be restricted to the embodiments described herein, but can be varied within the scope of the claim. In particular, the invention can be used also on naturally aspirating engines, on combustion engines of the Otto type having ignition means provided in the combustion chambers and port injection can be used instead of direct injection. Furthermore the intake air regulating means can be provided in the form of variable geometry turbo charger instead of a throttle valve as suggested above.

Also, instead of direct measurement of mass air flow by sensor 50, an estimate of mass air flow derived from other sensors and/or from other parameters could be used. And, instead of a direct measurement of intake pressure by sensor 60, an estimate of intake pressure derived from other sensors and/or from other parameters may be used.

## Claims

1. A combustion engine (10) comprising at least one combustion chamber (18) connected to an intake conduit (26) for supplying air to said at least one combustion chamber (18);

   - an exhaust feedback line (32) connected to said intake conduit (26) for exhaust gas feedback; and
   - means for controlling exhaust gas feedback including: an exhaust feedback flow control device (34) arranged in the exhaust gas feedback line (32) and a regulator unit (56), wherein said regulator unit (56) is arranged to control said exhaust feedback flow control device (34) in dependence upon an intake pressure ($P_{man}$) in said intake conduit (26) downstream of said exhaust feedback line (32) and a set point signal representing a desired intake pressure at a given operating point under dynamic conditions ($P_{intake,DynDem}$),

   **characterised in that** said desired intake pressure ($P_{intake,DynDem}$) is dependent on an air mass flow ($m_{air}$) into said engine and an amount ($m_{EGR,Stat}$) of exhaust gas feedback corresponding to a steady state amount of exhaust gas feedback present at a requested intake pressure at the same operating point but under stationary conditions ($P_{intake,Dem}$).

2. A combustion engine according to claim 1, **characterised in that** the engine further comprises:

   - means for controlling intake air mass flow including: an intake air regulating means (44) arranged in the intake conduit (26), an air mass flow meter (50) positioned in the intake conduit (26), a second regulator (46) unit which is arranged to control the intake air regulating means (44) in dependence of an input signal representing an air mass flow ($m_{air}$) measured by said air mass flow meter (50) and a set point signal representing a requested air mass flow ($m_{air,Dem}$).

3. A combustion engine according to claim 1 or 2, **characterised in that** the desired intake pressure ($P_{Intake,DynDem}$) is the intake pressure ($P_{man}$) which provides a target amount of exhaust gas feedback ($m_{EGR,taget}$) under a dynamic condition.

4. A combustion engine according to claim 1, 2 or 3, **characterised in that** the requested intake pressure ($P_{Intake,Dem}$) is the intake pressure ($P_{man}$) which provides a target amount of exhaust gas feedback at steady state.

5. A combustion engine according to any of claims 1- 4, **characterised in that** said means for controlling exhaust feed back includes a function block (64) wherein said desired intake pressure ($P_{intake,DynDem}$) is calculated as a function of said measured air mass flow ($m_{air}$), an amount of exhaust gas ($m_{EGR,Stat}$) corresponding to a steady state amount of exhaust gas present at a requested intake pressure ($P_{intake,Dem}$) and the requested air mass flow ($m_{air,Dem}$).

6. A combustion engine according to claim 5, **characterised in that** said function block (64) is arranged to calculate the desired intake pressure ($P_{intake,Dyn\,dem}$) from the following equation:

$$P_{intake,Dyn\,dem} = P_{intake} - \zeta\Delta m,$$

where $\zeta$ is a constant, which is set as $\zeta = T_{man}R/(V_{man}M_{air})$ and $\Delta m$ equals the mass difference of air flowing into $m_{in}$ and out from $m_{out}$ the intake conduit, thus $\Delta m = m_{in} - m_{out}$

7. A combustion engine according to claim 6, **characterised in that** the function block (64) is arranged to calculate the mass difference per engine stroke.

8. A combustion engine according to claim 6 or 7, **characterised in that** the air mass flowing out ($m_{out}$) from the intake conduit is set to be linear and dependent on the requested pressure ($P_{Intake,dem}$) and the requested air mass flow ($m_{air,dem}$), thus $m_{out} = P_{intake}\,m_{air,dem}/\,P_{intake,dem}$

9. A combustion engine according to claim 6, 7 or 8, **characterised in that** the air mass $m_{in}$ flowing in to the intake equals the sum of the air mass flow ($m_{air}$) measured by said air mass flow meter (50) and the mass flow of exhaust feedback ($m_{egr}$) into the intake conduit (26).

10. A combustion engine according to claim 9, **characterised in that** a ratio between the air mass flow and exhaust feed back mass flow is assumed to be constant, thus $m_{egr} = m_{alr}\cdot m_{egr,stat}/\,m_{air,dem}$

11. A combustion engine according to any of claims 6 - 10, **characterised in that** the desired intake pressure ($P_{Intake,Dyn\,dem}$) is calculated according to the following formula:

$$P_{Intake,Dyn\,dem} =$$
$$P_{Intake} + \zeta\,[m_{air}(1 + m_{EGR,stat}/\,m_{air,dem}) - P_{Intake}\,(m_{air,dem} + m_{EGR,Stat})/$$
$$P_{Intake,dem}]$$

12. A method for controlling a combustion engine (10) comprising at least one combustion chamber (18) connected to an intake conduit (26) for supplying air to said at least one combustion chamber (18), and an exhaust feedback line (32) connected to said intake conduit (26) for exhaust gas feedback, said method comprising the step of:

   regulating an exhaust feedback flow control device (34) arranged in said exhaust gas feed back line (32) in dependence of an intake pressure ($P_{man}$) in said intake conduit (26) downstream of said exhaust feedback line (32) and a set point signal representing the desired intake pressure at a given operating point under dynamic conditions ($P_{intake,DynDem}$), **characterised in that** said desired intake pressure ($P_{intake,DynDem}$) is dependent on an air mass flow ($m_{air}$) into said engine (10) and an amount ($m_{EGR,Stat}$) of exhaust gas feedback corresponding to a steady state amount of exhaust gas feedback present at a requested intake pressure at the same operating point but under stationary Conditions ($P_{intake,Dem}$).

13. A method of controlling a combustion engine according to claim 12, **characterised in that** the method further includes the step of regulating the intake air mass flow by a second regulator unit (46) which controls the intake air regulating means (44) in dependence of an input signal representing an air mass flow ($m_{air}$) measured by an air mass flow meter (50) and a set point signal representing a requested air mass flow ($m_{air,Dem}$);

14. A method according to claims 12 or 13, **characterised in that** the desired intake pressure ($P_{intake,DynDem}$) is the intake pressure ($P_{man}$) which provides a target amount ($m_{EGR,taget}$) of exhaust gas feedback under a dynamic condition.

15. A method according to any of claims 12 - 14, **characterised in that** the requested intake pressure ($P_{intake,Dem}$) is the intake pressure which provides a target amount of exhaust gas feedback at steady state.

16. A method according to any of claims 12- 15 **characterised in that** said desired intake pressure ($P_{intake,DynDem}$) is calculated as a function of said measured air mass flow ($m_{air}$), an amount of exhaust gas corresponding to a steady state amount of exhaust gas ($M_{EGR,Stat}$) present at a requested intake pressure ($P_{intake,Dem}$) and the requested air mass flow ($m_{air,Dem}$).

17. A method according to claim 16, **characterised in that** said desired intake pressure ($P_{intake,Dyn\ dem}$) is calculated from the following equation:

$$P_{intake,Dyn\ dem} = P_{intake} - \zeta \Delta m,$$

where $\zeta$ is a constant, which is set as $\zeta = T_{man}R/(V_{man}M_{air})$ and $\Delta m$ equals the mass difference of air flowing into $m_{in}$ and out from $m_{out}$ the intake conduit, thus $\Delta m = m_{in} - m_{out}$

18. A method according to claim 17, **characterised in that** the mass difference is calculated per engine stroke.

19. A method according to claim 17 or 18, **characterised in that** the air mass flowing out ($m_{out}$) from the intake conduit (26) is set to be linear and dependent on the requested pressure ($P_{intake,dem}$) and the requested air mass flow ($m_{air,dem}$), thus $m_{out} = P_{intake}\ m_{air,dem}/\ P_{intake,dem}$

20. A method according to any of claims 17 - 19, **characterised in that** the air mass ($m_{in}$) flowing in to the intake conduit (26) equals the sum of the air mass flow measured by said air mass flow meter ($m_{air}$) and the mass flow of exhaust feedback ($m_{egr}$) into the intake conduit (26).

21. A method according to claim 20, **characterised in that** a ratio between the air mass flow ($m_{air}$) and exhaust feed back mass flow ($m_{egr}$) is assumed to be constant, thus $m_{egr} = m_{air\ *}\ m_{EGR,stat}/\ m_{air,dem}$

22. A method according to any of claims 17 - 20, **characterised in that** the desired intake pressure ($P_{Intake,Dyn\ dem}$) is calculated according to the following formula:

$$P_{Intake,Dyn\ dem} = P_{Intake} + \zeta$$
$$[m_{air}(1 + m_{EGR,stat}/\ m_{air,dem}) - P_{Intake}\ (m_{air,dem} + m_{EGR,Stat})/\ P_{intake,dem}]$$

**Patentansprüche**

1. Verbrennungskraftmaschine (10) umfassend mindestens eine Verbrennungskammer (18), die mit einem Einlasskanal (26) verbunden ist, um Luft in die mindestens eine Verbrennungskammer (18) zuzuführen;

   - eine Abgasrückführleitung (32) verbunden mit dem Einlasskanal (26) für Abgasrückführung; und
   - Mittel zum Steuern der Abgasrückführung mit: einer Abgasrückführstromsteuerungsvorrichtung (34), die in der Abgasrückführleitung (32) angeordnet ist und einer Regulatoreinheit (56), worin die Regulatoreinheit (56) so angeordnet ist, dass sie die Abgasrückführstromsteuerungsvorrichtung (34) in Abhängigkeit von einem Einlassdruck ($P_{man}$) im Einlasskanal (26) nach der Abgasrückführleitung (32) und einem Führungsgrößensignal, das einen gewünschten Einlassdruck bei einem bestimmten Betriebspunkt unter dynamischen Bedingungen ($P_{Intake,\ DynDem}$) darstellt, steuert, **dadurch gekennzeichnet, dass** der gewünschte Einlassdruck ($P_{Intake,\ DynDem}$) von einem Luftmassenstrom ($m_{air}$) in die Kraftmaschine und einer Menge ($m_{EGR,Stat}$) an Abgasrückführung abhängt, die einer Menge an Abgasrückführung im stationären Zustand der Abgasrückführung entspricht, die bei einem erforderlichen Einlassdruck am gleichen Betriebspunkt, aber unter stationären Bedingungen ($P_{Intake,\ Dem}$) vorliegt.

2. Verbrennungskraftmaschine nach Anspruch 1, **dadurch gekennzeichnet, dass** die Kraftmaschine ferner umfasst:

   - Mittel zum Steuern des Einlassluftmassenstroms mit: einem Einlassluftregulierungsmittel (44), das im Einlasskanal (26) angeordnet ist, einem Luftmassenstrommessgerät (50), das im Einlasskanal (26) positioniert ist, einer zweiten Regulatoreinheit (46), die so angeordnet ist, dass sie das Einlassluftregulierungsmittel (44) in Abhängigkeit von einem Eingangssignal steuert, das einen Luftmassenstrom ($m_{air}$) darstellt, der vom Luftmassenstrommessgerät (50) gemessen ist und einem Führungsgrößensignal, das einen erforderlichen Luftmassenstrom ($m_{air,\ Dem}$) darstellt.

3. Verbrennungskraftmaschine nach Anspruch 1 oder 2, **dadurch gekennzeichnet, dass** der gewünschte Einlassdruck ($P_{Intake,\ DynDem}$) der Einlassdruck ($P_{man}$) ist, der eine Zielmenge an Abgasrückführung ($m_{EGR,target}$) unter dynamischen Bedingungen ergibt.

4. Verbrennungskraftmaschine nach Anspruch 1, 2 oder 3, **dadurch gekennzeichnet, dass** der erforderliche Einlassdruck ($P_{Intake,\ Dem}$) der Einlassdruck ($P_{man}$) ist, der eine Zielmenge an Abgasrückführung im stationären Zustand ergibt.

5. Verbrennungskraftmaschine nach einem der Ansprüche 1-4, **dadurch gekennzeichnet, dass** die Mittel zum Steuern der Abgasrückführung einen Funktionsblock (64) aufweisen, worin der gewünschte Einlassdruck ($P_{Intake,\ DynDem}$) in Funktion des gemessenen Luftmassenstroms ($m_{air}$), eine Menge an Abgas ($m_{EGR,Stat}$) einer Menge an Abgas im stationären Zustand entspricht, die bei einem erforderlichen Einlassdruck ($P_{Intake,\ Dem}$) vorliegt und dem erforderlichen Luftmassenstrom ($m_{air,\ Dem}$) berechnet wird.

6. Verbrennungskraftmaschine nach Anspruch 5, **dadurch gekennzeichnet, dass** der Funktionsblock (64) so angeordnet ist, dass er den gewünschten Einlassdruck ($P_{Intake,\ Dyndem}$) aus der folgenden Gleichung berechnet:

$$P_{Intake,\ Dyndem} = P_{intake} - \zeta \Delta m,$$

   wo $\zeta$ eine Konstante ist, die als $\zeta = T_{man}R/(V_{man}M_{air})$ gesetzt ist und $\Delta m$ gleich der Massendifferenz der Luft ist, die in $m_{in}$ und aus $m_{out}$ dem Einlasskanal strömt, so dass $\Delta m = m_{in} - m_{out}$.

7. Verbrennungskraftmaschine nach Anspruch 6, **dadurch gekennzeichnet, dass** der Funktionsblock (64) so angeordnet ist, dass er die Massendifferenz pro Kraftmaschinenhub berechnet.

8. Verbrennungskraftmaschine nach Anspruch 6 oder 7, **dadurch gekennzeichnet, dass** der aus dem Einlasskanal ausströmende Luftmassenstrom ($m_{out}$) so gesetzt ist, dass er linear und vom erforderlichen Druck ($P_{Intake,\ dem}$) und erforderlichen Luftmassenstrom ($m_{air,\ dem}$) abhängig ist, somit $m_{out} = P_{intake}/m_{air,\ dem}/P_{Intake,\ dem}$.

9. Verbrennungskraftmaschine nach Anspruch 6, 7 oder 8, **dadurch gekennzeichnet, dass** der in den Einlass einströmende Luftmassenstrom $m_{in}$ gleich der Summe des Luftmassenstroms ($m_{air}$), der vom Luftmassenstrommessgerät (50) gemessen ist und des Massenstroms der Abgasrückführung ($m_{egr}$) in den Einlasskanal (26) ist.

10. Verbrennungskraftmaschine nach Anspruch 9, **dadurch gekennzeichnet, dass** das Verhältnis zwischen dem Luftmassenstrom und dem Abgasrückführungsmassenstrom als konstant angenommen wird, so dass

$$m_{egr} = m_{air} \bullet m_{egr,\ stat} / m_{air,\ dem}.$$

11. Verbrennungskraftmaschine nach einem der Ansprüche 6-10, **dadurch gekennzeichnet, dass** der gewünschte Einlassdruck ($P_{Intake,\ Dyn\ dem}$) gemäß der folgenden Formel berechnet ist:

12. Verfahren zur Steuerung einer Verbrennungskraftmaschine (10) umfassend mindestens eine Verbrennungskammer (18), die mit einem Einlasskanal (26) verbunden ist, um Luft in die mindestens eine Verbrennungskammer (18) zuzuführen und eine Abgasrückführleitung (32) verbunden mit dem Einlasskanal (26) für Abgasrückführung, wobei das Verfahren den Schritt umfasst:

Regulieren einer Abgasrückführstromsteuerungsvorrichtung (34), die in der Abgasrückführleitung (32) angeordnet ist, in Abhängigkeit von einem Einlassdruck ($P_{man}$) im Einlasskanal (26) nach der Abgasrückführleitung (32) und einem Führungsgrößensignal, das einen gewünschten Einlassdruck bei einem bestimmten Betriebspunkt unter dynamischen Bedingungen ($P_{Intake, DynDem}$) darstellt, **dadurch gekennzeichnet, dass** der gewünschte Einlassdruck ($P_{intake, DynDem}$) vom Luftmassenstrom ($m_{air}$) in die Kraftmaschine (10) und einer Menge ($M_{ECR,Stat}$) an Abgasrückführung abhängt, die einer Menge an Abgasrückführung im stationären Zustand der Abgasrückführung entspricht, die bei einem erforderlichen Einlassdruck am gleichen Betriebspunkt, aber unter stationären Bedingungen ($P_{Intake, Dem}$) vorliegt.

13. Verfahren zur Steuerung einer Verbrennungskraftmaschine nach Anspruch 12, **dadurch gekennzeichnet, dass** das Verfahren ferner den Schritt umfasst:

Regulieren des Einlassluftmassenstroms mit einer zweiten Regulatoreinheit (46), die das Einlassluftregulierungsmittel (44) steuert in Abhängigkeit von einem Eingangssignal, das einen Luftmassenstrom ($m_{air}$) darstellt, der vom Luftmassenstrommessgerät (50) gemessen ist und einem Führungsgrößensignal, das einen erforderlichen Luftmassenstrom ($m_{air, Dem}$) darstellt.

14. Verfahren nach Anspruch 12 oder 13, **dadurch gekennzeichnet, dass** der gewünschte Einlassdruck ($P_{Intake, DynDem}$) der Einlassdruck ($P_{man}$) ist, der eine Zielmenge an Abgasrückführung ($m_{EGR,target}$) unter dynamischen Bedingungen ergibt.

15. Verfahren nach einem der Ansprüche 12-14, **dadurch gekennzeichnet, dass** der erforderliche Einlassdruck ($P_{Intake, Dem}$) der Einlassdruck ist, der eine Zielmenge an Abgasrückführung im stationären Zustand ergibt.

16. Verfahren nach einem der Ansprüche 12-15, **dadurch gekennzeichnet, dass** der gewünschte Einlassdruck ($P_{Intake, DynDem}$) in Funktion des gemessenen Luftmassenstroms ($m_{air}$), eine Menge an Abgas ($m_{EGR,Stat}$) einer Menge an Abgas im stationären Zustand entspricht, die bei einem erforderlichen Einlassdruck ($P_{Intake, Dem}$) vorliegt und dem erforderlichen Luftmassenstrom ($m_{air, Dem}$) berechnet wird.

17. Verfahren nach Anspruch 16, **dadurch gekennzeichnet, dass** der gewünschte Einlassdruck ($P_{Intake, Dyn dem}$) aus der folgenden Gleichung berechnet wird:

$$P_{Intake, Dyndem} = P_{Intake} - \zeta \Delta m,$$

wo $\zeta$ eine Konstante ist, die als $\zeta = T_{man}R/(V_{man}M_{air})$ gesetzt ist und $\Delta m$ gleich der Massendifferenz der Luft ist, die in $m_{in}$ und aus $m_{out}$ dem Einlasskanal strömt, so dass $\Delta m = m_{in} - m_{out}$.

18. Verfahren nach Anspruch 17, **dadurch gekennzeichnet, dass** die Massendifferenz pro Kraftmaschinenhub berechnet wird.

19. Verfahren nach Anspruch 17 oder 18, **dadurch gekennzeichnet, dass** der aus dem Einlasskanal (26) ausströmende Luftmassenstrom ($m_{out}$) so gesetzt wird, dass er linear und vom erforderlichen Druck ($P_{Intake, dem}$) und dem erforderlichen Luftmassenstrom ($m_{air, dem}$) abhängig ist, somit $m_{out} = P_{Intake} m_{air, dem} / P_{Intake, dem}$.

20. Verfahren nach einem der Ansprüche 17-19, **dadurch gekennzeichnet, dass** der in den Einlasskanal (26) einströmende Luftmassenstrom ($m_{in}$) gleich der Summe des Luftmassenstroms ($m_{air}$), der vom Luftmassenstrommessgerät gemessen ist, und des Massenstroms der Abgasrückführung ($m_{egr}$) in den Einlasskanal (26) ist.

21. Verfahren nach Anspruch 20, **dadurch gekennzeichnet, dass** das Verhältnis zwischen dem Luftmassenstrom ($m_{air}$) und dem Abgasrückführungsmassenstrom ($m_{egr}$) als konstant angenommen wird, so dass $m_{egr} = m_{air} \cdot m_{EGR, stat} / m_{air, dem}$.

22. Verfahren nach einem der Ansprüche 17-20, **dadurch gekennzeichnet, dass** der gewünschte Einlassdruck (PI$_{ntake, Dyn dem}$) gemäß der folgenden Formel berechnet wird:

$$P_{Intake, Dyn\ dem} = P_{Intake} +$$
$$\zeta[m_{air}(1+ m_{EGR, stat} / m_{air, dem}) - P_{Intake}(m_{air, dem} + m_{EGR, stat})/ P_{Intake, dem}].$$

**Revendications**

1. Moteur à combustion (10) comprenant au moins une chambre de combustion (18) reliée à un conduit d'admission (26) pour délivrer de l'air à ladite au moins une chambre de combustion (18) ;

   - une ligne d'alimentation en retour des gaz d'échappement (32) reliée au dit conduit d'admission (26) pour l'alimentation en retour des gaz d'échappement ; et
   - des moyens pour commander l'alimentation en retour des gaz d'échappement comprenant : un dispositif de contrôle de débit d'alimentation en retour des gaz d'échappement (34) agencé dans la ligne d'alimentation en retour des gaz d'échappement (32) et une unité de régulation (56),

   dans lequel ladite unité de régulation (56) est agencée pour commander ledit dispositif de contrôle de débit d'alimentation en retour des gaz d'échappement (34) en fonction d'une pression d'admission (P$_{man}$) dans ledit conduit d'admission (26) en aval de ladite ligne d'alimentation en retour des gaz d'échappement (32) et d'un signal de point de consigne représentant une pression d'admission désirée à un point de fonctionnement donné dans des conditions dynamiques (P$_{admission, DynDem}$), **caractérisé en ce que** ladite pression d'admission désirée (P$_{admission,DynDem}$) est dépendante d'un débit d'air massique (m$_{air}$) dans ledit moteur et d'une quantité (m$_{EGR,Stat}$) d'alimentation en retour des gaz d'échappement correspondant à une quantité de régime permanent d'alimentation en retour des gaz d'échappement à une pression d'admission demandée au même point de fonctionnement mais dans des conditions stationnaires (P$_{admission, Dem}$).

2. Moteur à combustion selon la revendication 1, **caractérisé en ce que** le moteur comprend en outre :

   - des moyens pour commander le débit d'air massique d'admission comprenant : un moyen de régulation d'air d'admission (44) agencé dans le conduit d'admission (26), un dispositif de mesure de débit d'air massique (50) positionné dans le conduit d'admission (26), une deuxième unité de régulateur (46) qui est agencée pour commander les moyens de régulation d'air d'admission (44) en fonction d'un signal d'entrée représentant un débit d'air massique (m$_{air}$) mesuré par ledit dispositif de mesure de débit d'air massique (50) et d'un signal de point de consigne représentant un débit d'air massique demandé (m$_{air,Dem}$).

3. Moteur à combustion selon la revendication 1 ou 2, **caractérisé en ce que** la pression d'admission désirée (P$_{admission,DynDem}$) est la pression d'admission (P$_{man}$) qui fournit une quantité cible d'alimentation en retour des gaz d'échappement (m$_{EGR,cible}$) dans une condition dynamique.

4. Moteur à combustion selon la revendication 1, 2 ou 3, **caractérisé en ce que** la pression d'admission désirée (P$_{admission,Dem}$) est la pression d'admission (P$_{man}$) qui fournit une quantité cible d'alimentation en retour des gaz d'échappement dans un régime permanent.

5. Moteur à combustion selon l'une quelconque des revendications 1 à 4, **caractérisé en ce que** lesdits moyens pour commander l'alimentation en retour des gaz d'échappement comprennent un bloc de fonction (64) dans lequel ladite pression d'admission désirée (P$_{admission, DynDem}$) est calculée comme une fonction dudit débit d'air massique mesuré (m$_{air}$), d'une quantité de gaz d'échappement (m$_{EGR,Stat}$) correspondant à une quantité de régime permanent des gaz d'échappement présents à une pression d'admission demandée (P$_{admission,Dem}$) et du débit d'air massique demandé (m$_{air,Dem}$).

6. Moteur à combustion selon la revendication 5, **caractérisé en ce que** ledit bloc de fonction (64) est agencé pour calculer la pression d'admission désirée (P$_{admission,Dyn dem}$) à partir de l'équation suivante :

$$P_{admission, Dyn\ dem} = P_{admission} - \zeta \Delta m,$$

où $\zeta$ est une constante, qui est fixée comme $\zeta = T_{man}R/(V_{man}M_{air})$ et $\Delta m$ est égale à la différence de masse de l'air circulant dans $m_{in}$ et hors $m_{out}$ du conduit d'admission, ainsi $\Delta m = m_{in} - m_{out}$

**7.** Moteur à combustion selon la revendication 6, **caractérisé en ce que** ledit bloc de fonction (64) est agencé pour calculer la différence de masse par course du moteur.

**8.** Moteur à combustion selon la revendication 6 ou 7, **caractérisé en ce que** la masse de l'air circulant hors ($m_{out}$) du conduit d'admission est fixée pour être linéaire et dépendante de pression demandée ($P_{admission,dem}$) et du débit d'air massique demandé ($m_{air,dem}$) ainsi

$$m_{out} = P_{admission}\ m_{air,dem}/P_{admission,dem}$$

**9.** Moteur à combustion selon la revendication 6, 7 ou 8, **caractérisé en ce que** la masse de l'air $m_{in}$ s'écoulant dans l'admission est égale à la somme du débit d'air massique ($m_{air}$) mesuré par ledit dispositif de mesure de débit d'air massique (50) et du débit d'air massique d'alimentation en retour d'échappement ($m_{egr}$) dans ledit conduit d'admission (26).

**10.** Moteur à combustion selon la revendication 9, **caractérisé en ce que** un rapport entre le débit d'air massique et le débit massique d'alimentation en retour d'échappement est supposé être constant, ainsi $m_{egr} = m_{air} \cdot m_{egr,stat}/m_{air,dem}$

**11.** Moteur à combustion selon l'une quelconque des revendications 6 à 10, **caractérisé en ce que** la pression d'admission désirée ($P_{admission,Dyn\ dem}$) est calculée selon la formule suivante :

$$P_{admission, Dyn\ dem} = P_{admission} + \zeta [m_{air}(1 + m_{EGR,stat}/m_{air,dem}) - P_{admission}(m_{air,dem} + m_{EGR,Stat})/P_{admission,dem}]$$

**12.** Procédé pour commander un moteur à combustion (10) comprenant au moins une chambre de combustion (18) reliée à un conduit d'admission (26) pour délivrer de l'air à ladite au moins une chambre de combustion (18), et une ligne d'alimentation en retour des gaz d'échappement (32) reliée au dit conduit d'admission (26) pour l'alimentation en retour des gaz d'échappement, ledit procédé comprenant les étapes consistant à :

réguler un dispositif de contrôle de débit d'alimentation en retour des gaz d'échappement (34) agencé dans la ligne d'alimentation en retour des gaz d'échappement (32) en fonction d'une pression d'admission ($P_{man}$) dans ledit conduit d'admission (26) en aval de ladite ligne d'alimentation en retour des gaz d'échappement (32) et d'un signal de point de consigne représentant une pression d'admission désirée à un point de fonctionnement donné dans des conditions dynamiques ($P_{admission,DynDem}$) **caractérisé en ce que** ladite pression d'admission désirée ($P_{admission,\ DynDem}$) est dépendante d'un débit d'air massique ($m_{air}$) dans ledit moteur (10) et d'une quantité ($m_{EGR,Stat}$) d'alimentation en retour des gaz d'échappement correspondant à une quantité de régime permanent d'alimentation en retour des gaz d'échappement à une pression d'admission demandée au même point de fonctionnement mais dans des conditions stationnaires ($P_{admission,Dem}$).

**13.** Procédé pour commander un moteur à combustion selon la revendication 12, **caractérisé en ce que** le procédé comprend en outre l'étape consistant à réguler le débit d'air massique d'admission par une deuxième unité de régulateur (46) qui commande les moyens de régulation d'air d'admission (44) en fonction d'un signal d'entrée représentant un débit d'air massique ($m_{air}$) mesuré par un dispositif de mesure de débit d'air massique (50) et d'un signal de point de consigne représentant un débit d'air massique demandé ($m_{air,Dem}$) .

**14.** Procédé selon la revendication 12 ou 13, **caractérisé en ce que** la pression d'admission désirée ($P_{admission,DynDem}$) est la pression d'admission ($P_{man}$) qui fournit une quantité cible d'alimentation en retour des gaz d'échappement

($m_{EGR,cible}$) dans une condition dynamique.

**15.** Procédé selon l'une quelconque des revendications 12 à 14, **caractérisé en ce que** la pression d'admission désirée ($P_{admission, Dem}$) est la pression d'admission qui fournit une quantité cible d'alimentation en retour des gaz d'échappement dans un régime permanent.

**16.** Procédé selon l'une quelconque des revendications 12 à 15, **caractérisé en ce que** ladite pression d'admission désirée ($P_{admission,DynDem}$) est calculée comme une fonction dudit débit d'air massique mesuré ($m_{air}$), d'une quantité de gaz d'échappement correspondant à une quantité de régime permanent des gaz d'échappement ($m_{EGR,Stat}$) présents à une pression d'admission demandée ($P_{admission,Dem}$) et du débit d'air massique demandé ($m_{air,Dem}$).

**17.** Procédé selon la revendication 16, **caractérisé en ce que** la pression d'admission désirée ($P_{admission,Dyn\ dem}$) est calculée à partir de l'équation suivante :

$$P_{admission,Dyn\ dem} = P_{admission} - \zeta\Delta m,$$

où $\zeta$ est une constante, qui est fixée comme $\zeta = T_{man}R/(V_{man}M_{air})$ et $\Delta m$ est égale à la différence de masse de l'air circulant dans $m_{in}$ et hors $m_{out}$ du conduit d'admission, ainsi $\Delta M = m_{in} - m_{out}$

**18.** Procédé selon la revendication 17, **caractérisé en ce que** la différence de masse est calculée par course du moteur.

**19.** Procédé selon la revendication 17 ou 18, **caractérisé en ce que** la masse de l'air circulant hors ($m_{out}$) du conduit d'admission (26) est fixée pour être linéaire et dépendante de pression demandée ($P_{admission,dem}$) et du débit d'air massique demandé ($m_{air,dem}$), ainsi $m_{out} = P_{admission}\ m_{air,dem}/P_{admission,dem}$

**20.** Procédé selon l'une quelconque des revendications 17 à 19, **caractérisé en ce que** la masse de l'air ($m_{in}$) s'écoulant dans le conduit d'admission est égale à la somme du débit d'air massique mesuré par ledit dispositif de mesure de débit d'air massique ($m_{air}$) et du débit d'air massique d'alimentation en retour d'échappement ($m_{egr}$) dans ledit conduit d'admission (26).

**21.** Procédé selon la revendication 20, **caractérisé en ce que** un rapport entre le débit d'air massique ($m_{air}$) et le débit massique d'alimentation en retour d'échappement ($m_{egr}$) est supposé être constant , ainsi $m_{egr} = m_{air} \cdot m_{EGR,\ stat}/m_{air,\ dem}$

**22.** Procédé selon l'une quelconque des revendications 17 à 20, **caractérisé en ce que** la pression d'admission désirée ($P_{admission,Dyn\ dem}$) est calculée selon la formule suivante :

$$P_{admission,Dyn\ dem} = P_{admission} + \zeta\ [m_{air}(1 + m_{EGR,stat}/m_{air,dem}) - P_{admission}$$

$$(m_{air,dem} + m_{EGR,Stat})/P_{admission,dem}]$$

*FIG.1*

Receive input signal
corr. to air mass. — 100

Receive set point
signal corr.to requested. — 102

Calculate difference — 104

Generate set point
signal to intake air valve — 106

FIG.2

Receive input signal corr.
to measured intake pressure — 108

Calculate set point signal
for desired pressure. — 110

Receive set point signal
for desired pressure. — 112

Calculate difference. — 114

Generate set point signal
for EGR valve. — 116

FIG.3